# EUROPEAN PATENT APPLICATION

(11) **EP 2 839 956 A1**
(43) Date of publication of application: **25.02.2015**
(21) Application number: 13778331.2
(22) Date of filing: 16.04.2013
(51) Int. Cl.: B32B 27/30, C08F 8/04

(54) **LAMINATE BODY**

(30) Priority: 17.04.2012 JP 2012093697
(71) Applicant: Mitsubishi Gas Chemical Company, Inc., Tokyo 100-8324 (JP)
(72) Inventor: KOIKE, Nobuyuki, Chiyoda-ku Tokyo 100-8324 (JP); HANNE, Takashi, Hiratsuka-shi Kanagawa 254-0016 (JP); MATSUSHIMA, Yasuyuki, Hiratsuka-shi Kanagawa 254-0016 (JP); MIZUNO, Shino, Hiratsuka-shi Kanagawa 254-0016 (JP)
(74) Representative: Vossius & Partner
(86) International application number: PCT/JP2013/061234
(87) International publication number: WO 2013/157530

(57) **Abstract**

An object of the present invention is to provide a laminate material for a transparent substrate material or protecting material, which exhibits excellent surface hardness, excellent form stability under heat or when absorbing water, and excellent adhesion to a coating composition, and excellent heat resistance under load, and which maintains excellent adhesion between the layers. The present invention is a laminate material comprising a first layer comprising a vinyl copolymer resin (A), and a second layer comprising a thermoplastic resin (B) stacked on the first layer, or comprising the first layer, the second layer, and a third layer comprising the vinyl copolymer resin (A) stacked on the second layer (the vinyl copolymer resin (A) constituting the first layer and the vinyl copolymer resin (A) constituting the third layer may be the same or different).

## Description

### FIELD OF THE INVENTION

The present invention relates to a laminate material comprising a specific resin, and more particularly to a laminate material suitable for the use as a transparent substrate material or protecting material.

### BACKGROUND ART

A transparent sheet comprising a resin comprised mainly of methyl methacrylate (hereinafter, referred to as "methacrylic resin") is used in, for example, an information board, an indicator board, a signboard, a frame, a window for a vehicle, such as a gondola, a sunroof, a window for building, a partition, a window for room door, a cover for a lighting, a front panel for an image display device, an instrument cover, a reflector, a light guide plate, a UV screening filter, and a cover for an electronic device. However, the methacrylic resin has high water absorption so that the resin is easily affected by a change of the humidity of an atmosphere to suffer a change in size or warpage. Further, the methacrylic resin has a low heat-resistance temperature, and hence has problems in that the resin suffers a change in size or warpage due to the method of using the resin or the environment in which the resin is used.

With respect to a method for obtaining a resin product having reduced water absorption, patent document 1 discloses a transparent multilayer sheet for a display panel, which has a methacrylic resin layer on at least one side of a methyl methacrylate-styrene copolymer resin sheet, and has a hard-coat layer on at least one surface of the methacrylic resin layer. In this transparent multilayer sheet, the methyl methacrylate-styrene copolymer resin sheet having a low moisture absorption and the methacrylic resin layer capable of supporting the hard-coat layer to exhibit satisfactory hardness are stacked, and these stacked layers having different functions are intended to achieve a plurality of functions. However, the transparent multilayer sheet of patent document 1 has problems in that the sheet is likely to absorb water to suffer deformation and that the sheet is unsatisfactory in heat resistance.

Further, patent document 2 discloses a plastic sheet which comprises an intermediate layer having a saturation water absorption of less than 0.4% by mass, and a surface layer having a saturation water absorption of 0.4% by mass or more, wherein the saturation water absorption of the intermediate layer is lower by 0.05% by mass or more than the saturation water absorption of the surface layer. Specifically, a methyl methacrylate-styrene copolymer resin is used in the intermediate layer, and, in the surface layer is used a methyl methacrylate-styrene copolymer resin having a ratio of the constituent units different from that of the intermediate layer. Generally, the plastic sheet has been subjected to hard-coat treatment, and the hard-coat coating composition (coating film) may be removed from the sheet.

Patent document 3 discloses a thermoplastic resin laminate material which comprises a vinyl copolymer resin comprising constituent units derived from a specific (meth)acrylate and specific aliphatic vinyl constituent units, and a thermoplastic resin, wherein the vinyl copolymer resin is stacked on one side or both sides of the thermoplastic resin. In this patent document, as an example of the thermoplastic resin, there is mentioned a methyl methacrylate-styrene copolymer resin. The thermoplastic resin laminate material of patent document 3 has been subjected to, for example, hard-coat treatment, and the composition of the resin for the surface layer or the resin for the intermediate layer may cause the coating composition (coating film) for the hard-coat treatment to be removed or to absorb water, leading to warpage of the laminate material.

### PRIOR ART REFERENCES

### Patent Documents

Patent document 1: Japanese Unexamined Patent Publication No. 2010-66744
Patent document 2: Japanese Unexamined Patent Publication No. 2005-300967
Patent document 3: Japanese Unexamined Patent Publication No. 2009-196125

### SUMMARY OF THE INVENTION

### Problems to be Solved by the Invention

In view of the above prior art, the present inventor has conducted extensive and intensive studies with a view toward developing a synthetic resin laminate material for use in a transparent substrate material or protecting material, which exhibits excellent surface hardness, excellent form stability under heat or when absorbing water, and excellent adhesion to a coating composition. As a result, the following synthetic resin laminate material was invented, and a patent application has been made (Japanese Patent Application No. 2011-98073).

"A synthetic resin laminate material having a vinyl copolymer resin (A) layer having a specific structure, and a vinyl copolymer resin (B) layer having styrene constitutional units, the layer (A) being stacked on both sides of the layer (B), wherein the vinyl copolymer resin (A) comprises (meth)acrylate constituent units (a) represented by the formula (1) below and aliphatic vinyl constituent units (b) represented by the formula (2) below, the amount of the units (a) being 50 to 85 mol%, based on the total moles of the all constituent units of the resin (A), and wherein the amount of the styrene constituent units is 60 to 90 mol%, based on the total moles of the all constituent units of the resin (B). 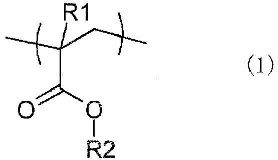 Wherein R1 represents hydrogen or a methyl group, and R2 represents a hydrocarbon group having 1 to 16 carbon atoms. 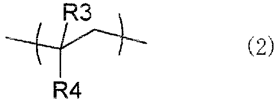 Wherein R3 represents hydrogen or a methyl group, and R4 represents a cyclohexyl group optionally having a hydrocarbon substituent having 1 to 4 carbon atoms. "

The synthetic resin laminate material of the above patent application has excellent surface hardness, excellent heat resistance, and excellent adhesion to a coating composition; however, the heat resistance of the laminate material under load must be improved. Particularly, with respect to the synthetic resin laminate material used as, for example, a transparent substrate material, when the substrate is placed in a wet heat environment and allowed to stand against a wall so that a stress is applied to the substrate, the substrate is likely to deflect and suffer deformation.

Accordingly, an object of the present invention is to provide a laminate material for use in a transparent substrate material or protecting material, which has excellent surface hardness, excellent form stability under heat or when absorbing water, excellent adhesion to a coating composition, and excellent heat resistance under load. In the laminate material, the adhesion between the layers constituting the laminate material is very important. Therefore, an object of the present invention is to provide a laminate material which exhibits the above excellent properties while maintaining excellent adhesion between the layers.

### Means to Solve the Problems

The present inventor has conducted extensive and intensive studies with a view toward solving the above problems, particularly, with respect to the above-mentioned resin layer sandwiched between the vinyl copolymer resin (A) layers. As a result, it has been found that the problems can be solved by a laminate material which comprises a first layer comprising a specific vinyl copolymer resin (A), and a second layer, comprising a specific thermoplastic resin (B) stacked on the first layer, or which comprises the first layer, the second layer, and a third layer comprising a specific vinyl copolymer resin (A) stacked on the second layer, and the present invention has been completed.

Specifically, the present invention provides the laminate material described below and a transparent substrate material and a transparent protecting material each using the laminate material.
1. A laminate material comprising a first layer comprising a vinyl copolymer resin (A), and a second layer comprising a thermoplastic resin (B) stacked on the first layer,
   or comprising the first layer, the second layer, and a third layer comprising a vinyl copolymer resin (A) stacked on the second layer,
   the vinyl copolymer resin (A) constituting the first layer and the vinyl copolymer resin (A) constituting the third layer being the same or different, the vinyl copolymer resin (A) comprising a constituent unit (a) represented by the following formula (1) and a constituent unit (b) represented by the following formula (2): 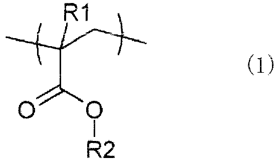 wherein, in the formula (1), R1 represents a hydrogen atom or a methyl group, and R2 represents a hydrocarbon group having 1 to 16 carbon atoms and optionally having a hydroxyl group or an alkoxy group, and when a plurality of the constituent units (a) are present, a plurality of R1 s and a plurality of R2s are the same or different, 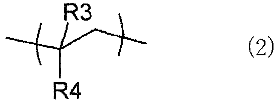 wherein, in the formula (2), R3 represents a hydrogen atom or a methyl group, and R4 represents a phenyl group, a cyclohexadienyl group, a cyclohexenyl group, or a cyclohexyl group, which optionally has at least one substituent selected from the group consisting of a hydrocarbon group having 1 to 4 carbon atoms, a hydroxyl group, an alkoxy group, and a halogen atom, and when a plurality of the constituent units (b) are present, a plurality of R3s and a plurality of R4s are the same or different,
   wherein the amount of the constituent unit (a) is 50 to 85 mol%, based on the total moles of the constituent unit (a) and constituent unit (b),
   wherein the thermoplastic resin (B) comprises a constituent unit (c) derived from an aromatic vinyl compound, and a constituent unit (d) derived from at least one compound selected from the group consisting of acrylic acid, methacrylic acid, an unsaturated cyclic acid anhydride, and a maleimide compound.
2. The laminate material according to item 1 above, wherein the vinyl copolymer resin (A) has a glass transition temperature of 110 to 140°C.
3. The laminate material according to item 1 or 2 above, wherein, in the formula (1), each of R1 and R2 is a methyl group.
4. The laminate material according to any one of items 1 to 3 above, wherein, in the formula (2), R4 is a phenyl group, a cyclohexadienyl group, a cyclohexenyl group, or a cyclohexyl group.
5. The laminate material according to any one of items 1 to 4 above, wherein the amount of the constituent unit (c) is 70 to 95 mol%, based on the total moles of the constituent unit (c) and constituent unit (d) of the thermoplastic resin (B).
6. The laminate material according to any one of items 1 to 5 above, wherein the sum of the amounts of the constituent unit (c) and constituent unit (d) is 90 mol% or more, based on the total moles of the all constituent units present in the thermoplastic resin (B).
7. The laminate material according to any one of items 1 to 6 above, wherein the constituent unit (c) is derived from styrene, and the constituent unit (d) is derived from at least one compound selected from the group consisting of acrylic acid, methacrylic acid, maleic anhydride, N-phenylmaleimide, and N-cyclohexylmaleimide.
8. The laminate material according to any one of items 1 to 7 above, wherein the laminate material has a total thickness in the range of from 0.1 to 10.0 mm, and the first layer and/or third layer has a thickness in the range of from 10 to 500 µm.
9. The laminate material according to any one of items 1 to 8 above, wherein the laminate material has a total thickness in the range of from 0.1 to 3.0 mm, and the first layer and/or third layer has a thickness in the range of from 20 to 200 µm.
10. The laminate material according to any one of items 1 to 9 above, wherein at least one layer of the first layer, the second layer, and the third layer contains an ultraviolet light absorber.
11. The laminate material according to any one of items 1 to 10 above, wherein at least one of the top and bottom surfaces of the laminate material as viewed in the stacking direction has been subjected to at least one treatment selected from the group consisting of a hard-coat treatment, an antireflection treatment, an antifouling treatment, an antistatic treatment, a weathering resistance treatment, and a glare protection treatment.
12. A transparent substrate material comprising the laminate material according to any one of items 1 to 11 above.
13. A transparent protecting material comprising the laminate material according to any one of items 1 to 11 above.

### Effect of the Invention

In the present invention, there is provided a laminate material for use in a transparent substrate material or protecting material, which exhibits excellent surface hardness, excellent form stability under heat or when absorbing water, excellent adhesion to a coating composition, and excellent heat resistance under load while maintaining excellent adhesion between the layers.

### MODE FOR CARRYING OUT THE INVENTION

Hereinbelow, the laminate material of the present invention will be described in detail. In the present specification, the term "(meth)acrylic acid" means acrylic acid and/or methacrylic acid.

### [Laminate material]

The laminate material of the present invention, as mentioned above, comprises a first layer comprising a specific vinyl copolymer resin (A), and a second layer comprising thermoplastic resin (B) stacked on the first layer, or comprises the first layer, the second layer, and a third layer comprising vinyl copolymer resin (A) stacked on the second layer. That is, the laminate material of the present invention is a two-layer laminate material having a layer comprising vinyl copolymer resin (A) and a layer comprising thermoplastic resin (B), or a three-layer laminate material having a layer comprising thermoplastic resin (B) sandwiched between layers comprising vinyl copolymer resin (A). These layers are individually described below.

### [First layer]

The first layer constituting the laminate material of the present invention comprises vinyl copolymer resin (A), and the resin imparts to the laminate material of the present invention excellent surface hardness, excellent form stability under heat or when absorbing water, and excellent adhesion to a coating composition.

Vinyl copolymer resin (A) comprises constituent unit (a) represented by the formula (1) above and constituent unit (b) represented by the formula (2) above. Constituent unit (a) contributes to excellent surface hardness and excellent adhesion to a coating composition of vinyl copolymer resin (A), and constituent unit (b) contributes to excellent form stability under heat or when absorbing water of vinyl copolymer resin (A).

In vinyl copolymer resin (A), the amount of constituent unit (a) is 50 to 85 mol%, preferably in the range of from 60 to 85 mol%, based on the total moles of constituent unit (a) and constituent unit (b) (100 mod%). When the amount of constituent unit (a) is less than 50 mol%, excellent adhesion to a coating composition or excellent surface hardness cannot be achieved. On the other hand, when the amount of constituent unit (a) is in the range of more than 85 mol%, the form stability is lowered due to absorption of water or heat so that the laminate material cannot be practically used, and further the adhesion of the first layer to the second layer becomes poor. The amount of each constituent unit in the resin can be measured by a known measurement method, such as ¹H-NMR. This applies not only to vinyl copolymer resin (A) but also to the below-described thermoplastic resin (B) and other resins.

The sum of the amounts of constituent unit (a) and constituent unit (b), based on the total moles of the all constituent units of vinyl copolymer resin (A) (100 mol%%), is generally 90 to 100 mol%, preferably 95 to 100 mol%, more preferably 98 to 100 mol%. When the sum of the amounts of constituent unit (a) and constituent unit (b) is less than 100 mol%, the below-described constituent unit derived from another monomer is present.

Vinyl copolymer resin (A) may be a random copolymer in which the constituent units are randomly arranged, or a block copolymer in which a block comprising certain constituent units is present.

Vinyl copolymer resin (A) preferably has a glass transition temperature in the range of from 110 to 140°C. By virtue of containing vinyl copolymer resin (A) having a glass transition temperature of 110°C or higher, the laminate material of the present invention is unlikely to suffer deformation or formation of a crack in a high-temperature environment or a high-humidity environment. Further, by virtue of containing the resin having a glass transition temperature of 140°C or lower, the laminate material exhibits excellent processability in, for example, continuous thermal shaping using a planishing roll or a shaping roll, or batchwise thermal shaping using a planishing mold or a shaping mold. In the present specification, the glass transition temperature means a temperature as measured using a differential scanning calorimeter with respect to 10 mg of a sample at a temperature elevation rate of 10°C/minute and calculated by a middle-point method.

Further, with respect to the weight average molecular weight of vinyl copolymer resin (A), there is no particular limitation, but, from the viewpoint of the strength and moldability of resin (A), the weight average molecular weight is preferably 50,000 to 400,000, more preferably 70,000 to 300,000. In the present specification, the weight average molecular weight is a weight average molecular weight as measured by gel permeation chromatography (GPC), in which standard polystyrene is used for molecular weight calibration.

### <Constituent unit (a)>

In the formula (1), R1 represents a hydrogen atom or a methyl group, and R2 represents a hydrocarbon group having 1 to 16 carbon atoms, wherein the hydrocarbon group optionally has a hydroxyl group or an alkoxy group. The number of carbon atoms of the hydrocarbon group is preferably 1 to 12. The number of carbon atoms of the alkoxy group is generally 1 to 14, and the number of carbon atoms constituting the alkoxy group is included in the number of carbon atoms in the hydrocarbon group.

Specific examples of the hydrocarbon groups include alkyl groups, such as a methyl group, an ethyl group, a butyl group, a lauryl group, a stearyl group, a cyclohexyl group, and an isobornyl group; hydroxyalkyl groups, such as a 2-hydroxyethyl group, a 2-hydroxypropyl group, and a 2-hydroxy-2-methylpropyl group; alkoxyalkyl groups, such as a 2-methoxyethyl group and a 2-ethoxyethyl group; and aryl groups, such as a benzyl group and a phenyl group.

In vinyl copolymer resin (A), a plurality of constituent units (a) are generally present. In this case, a plurality of R1s and a plurality of R2s may be the same or different.

The above-described constituent unit (a) is preferably (a)an (meth)acrylate constituent unit corresponding to the formula (1) wherein R2 is a methyl group or an ethyl group, further preferably a methyl methacrylate constituent unit corresponding to the formula (1) wherein R1 is a methyl group and R2 is a methyl group.

A monomer forming constituent unit (a) is (a)an (meth)acrylate monomer, specifically, can be represented by the following formula (3).

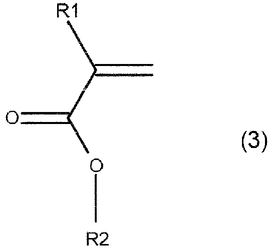

R1 and R2 are as defined for the formula (1) above.

The (meth)acrylate monomer is preferably one having 4 to 20 carbon atoms. With respect to the (meth)acrylate monomer, there is no particular limitation, and specific examples of the (meth)acrylate monomers include methyl (meth)acrylate, ethyl (meth)acrylate, butyl (meth)acrylate, lauryl (meth)acrylate, stearyl (meth)acrylate, cyclohexyl (meth)acrylate, isobornyl (meth)acrylate, 2-hydroxyethyl (meth)acrylate, 2-hydroxypropyl (meth)acrylate, 2-hydroxy-2-methylpropyl (meth)acrylate, 2-methoxyethyl (meth)acrylate, 2-ethoxyethyl (meth)acrylate, benzyl (meth)acrylate, and phenyl (meth)acrylate. These can be used individually or in combination. Of these, from the viewpoint of the polymerization reactivity and the physical properties of the resultant vinyl copolymer resin (A), preferred is methyl methacrylate.

### <Constituent unit (b)>

Constituent unit (b) is described below. As mentioned above, constituent unit (b) is represented by the following formula (2). 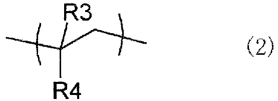 In the formula (2), R3 represents a hydrogen atom or a methyl group, and R4 represents a phenyl group, a cyclohexadienyl group, a cyclohexenyl group, or a cyclohexyl group, which optionally has at least one substituent selected from the group consisting of a hydrocarbon group having 1 to 4 carbon atoms, a hydroxyl group, an alkoxy group, and a halogen atom.

As described below, constituent unit (b) is derived from a styrene vinyl monomer, and the resin having the formula (2) wherein R4 is a 6-membered ring other than a phenyl group is obtained by hydrogenating constituent unit (b) in vinyl copolymer resin (A) (or hydrogenating a benzene ring in the vinyl monomer and copolymerizing the resultant monomer with another predetermined monomer). In the hydrogenation of the above-mentioned benzene ring, when the hydrogenation has completely proceeded, the benzene ring becomes a cyclohexyl group, and, when the hydrogenation has partially proceeded, the benzene ring becomes a cyclohexenyl group or a cyclohexadienyl group. Alternatively, a case is considered in which no hydrogenation occurs so that the benzene ring remains, that is, the phenyl group remains as such.

Examples of the hydrocarbon groups having 1 to 4 carbon atoms include a methyl group, an ethyl group, a propyl group, an isopropyl group, a butyl group, an isobutyl group, and a tert-butyl group. The number of carbon atoms of the alkoxy group is generally 1 to 14, and specific examples of the alkoxy groups include a methoxy group, an ethoxy group, a propoxy group, an isopropoxy group, a butoxy group, an isobutoxy group, and a tert-butoxy group. Examples of the halogen atoms include F, Cl, Br, and I.

In vinyl copolymer resin (A), a plurality of constituent units (b) are generally present. In this case, a plurality of R3s and a plurality of R4s may be the same or different.

From the viewpoint of the cost of the production of vinyl copolymer resin (A), R4 is preferably a group having no substituent, i.e., a phenyl group, a cyclohexadienyl group, a cyclohexenyl group, or a cyclohexyl group.

A monomer forming constituent unit (b) is a styrene vinyl monomer, and can be represented by the following formula (4).

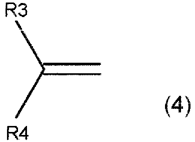

R3 and R4 are as defined for the formula (2) above.

Specific examples of the styrene vinyl monomers include styrene, α-methylstyrene, o-methylstyrene, p-hydroxystyrene, an alkoxystyrene (e.g., p-methoxystyrene), chlorostyrene, and derivatives thereof. These can be used individually or in combination. Of these, from the viewpoint of the cost of the production of vinyl copolymer resin (A), preferred are styrene and α-methylstyrene.

### <Other monomers>

In the present invention, a monomer forming a constituent unit other than the above-mentioned constituent units (a) and (b) can be copolymerized in such an amount that the effects of vinyl copolymer resin (A) are not sacrificed.

### <Method for producing vinyl copolymer resin (A)>

Hereinbelow, a method for producing vinyl copolymer resin (A) comprising the above-described constituent unit (a) and constituent unit (b) is described.

In the copolymerization of the monomer components for producing vinyl copolymer resin (A), a known method can be used. The monomer components are charged in a reaction apparatus so that the amounts of constituent unit (a) and constituent unit (b) in the produced vinyl copolymer resin (A) fall in the above-mentioned ranges, and subjected to, for example, a bulk polymerization method, a suspension polymerization method, or a solution polymerization method, thus producing vinyl copolymer resin (A).

In the solution polymerization method, vinyl copolymer resin (A) is produced by, for example, a method in which a monomer composition comprising monomers, a chain transfer agent, and a polymerization initiator is continuously fed to a perfect mixing vessel and subjected to continuous polymerization at 100 to 180°C.

With respect to the above-mentioned polymerization initiator, any known initiators can be used, and specific examples of the initiators include organic peroxides, such as t-amyl peroxy-2-ethylhexanoate, t-butyl peroxy-2-ethylhexanoate, lauroyl peroxide, benzoyl peroxide, 1,1-di(t-hexylperoxy)-3,3,5-trimethylcyclohexane, 1,1-di(t-hexylperoxy)cyclohexane, 1,1-di(t-butylperoxy)cyclohexane, t-hexylperoxyisopropyl monocarbonate, t-amyl peroxynormaloctoate. t-butylperoxyisopropyl monocarbonate, di-t-butyl peroxide, and 2,2-bis(4,4-di-t-butylperoxycyclohexyl)propane. These can be used individually or in combination.

Examples of chain transfer agents used in the polymerization include α-methylstyrene dimer, terpinolene, and dipentene.

Examples of solvents used in the polymerization reaction include hydrocarbon solvents, such as toluene, xylene, cyclohexane, and methylcyclohexane; ester solvents, such as ethyl acetate and methyl isobutyrate; ketone solvents, such as acetone and methyl ethyl ketone; ether solvents, such as tetrahydrofuran and dioxane; and alcohol solvents, such as methanol and isopropanol.

After completion of the polymerization reaction, the resultant reaction mixture is withdrawn from the polymerization vessel, and the volatile component is removed from the mixture to obtain vinyl copolymer resin (A). As a method for removing the volatile component, a known method, for example, using a devolatilizing extruder or a vacuum devolatilizing vessel can be used.

Vinyl copolymer resin (A) used in the present invention, which is, for example, produced as mentioned above, is commercially available, and specific examples of commercially available products include ESTYRENE MS750, manufactured by Nippon Steel Chemical Group (methyl methacrylate/styrene = 75/25 (molar ratio)); ESTYRENE MS600, manufactured by Nippon Steel Chemical Group (methyl methacrylate/styrene = 63/37 (molar ratio)); and CLEARPOR, manufactured by JSP (methyl methacrylate/styrene/α-methylstyrene = 75/18/7 (molar ratio)).

### (Hydrogenation)

With respect to, for example, the above-obtained (or commercially available) vinyl copolymer resin (A), at least part of the benzene rings in constituent unit (b) (and constituent unit (a) and a constituent unit derived from another monomer, which have benzene rings) may be hydrogenated. The hydrogenation of the benzene rings improves vinyl copolymer resin (A) in heat resistance, so that the laminate material of the present invention can be improved in the heat resistance, making it possible to further improve the form stability under heat.

From the viewpoint of the heat resistance, the rate of hydrogenation of the benzene rings is generally 70% or more, preferably 90% or more, more preferably 95% or more, especially preferably 98% or more. That is, the amount of the unhydrogenated benzene rings in vinyl copolymer resin (A) is generally 30% or less, preferably 10% or less, more preferably 5% or less, especially preferably 2% or less. When the number of the benzene rings in vinyl copolymer resin (A) (the size (molecular weight) of vinyl copolymer resin (A) and the amounts of constituent unit (b) and a constituent unit derived from another monomer having a benzene ring in the resin) is large, the improvement of the heat resistance by hydrogenation is generally large. Further, when the amount of the unhydrogenated benzene rings in vinyl copolymer resin (A) is in the range of more than 30%, vinyl copolymer resin (A) is likely to be poor in transparency.

In the molecules of vinyl copolymer resin (A) which has been subjected to hydrogenation reaction, it is considered that there are present constituent unit (b) in which all the double bonds of benzene ring (R4 in the formula (2)) of the monomer forming the constituent unit are hydrogenated (cyclohexyl group), constituent unit (b) in which part of the double bonds of benzene ring are hydrogenated (cyclohexadienyl group and cyclohexenyl group), and constituent unit (b) in which the double bonds of benzene ring are not hydrogenated (phenyl group).

The expression that the rate of hydrogenation of the benzene rings is 70% or more means that the proportion of the number of R4s which are a cyclohexadienyl group, a cyclohexenyl group, or a cyclohexyl group, each optionally having the substituent, to the total number of all R4s in the all constituent units of vinyl copolymer resin (A) is 70% or more. When constituent unit (a) and a constituent unit derived from another monomer have benzene rings before being hydrogenated, the proportion of the number of R4s and the benzene rings in the above constituent units, which are a cyclohexadienyl group, a cyclohexenyl group, or a cyclohexyl group, to the total number of all R4s and the benzene rings in the all constituent units is 70% or more.

Further, the expression that the proportion of the number of R4s, which are a cyclohexadienyl group, a cyclohexenyl group, or a cyclohexyl group, to the total number of all R4s in the all constituent units is 70% or more means that, for example, when 100 constituent units (b) are present (and no benzene ring is present in constituent unit (a) and a constituent unit derived from another monomer), 70 or more R4s among the 100 R4s are a cyclohexadienyl group, a cyclohexenyl group, or a cyclohexyl group.

The rate of hydrogenation can be determined from a reduction ratio of the absorbance at 260 nm (corresponding to the absorption of a benzene ring) of the resin between before and after the hydrogenation reaction in a UV spectrum measurement.

The above-described hydrogenation reaction is conducted in an appropriate solvent. The solvent used in the hydrogenation reaction may be the same as or different from the solvent for the above-mentioned polymerization. Examples of solvents include hydrocarbon solvents, such as cyclohexane and methylcyclohexane; ester solvents, such as ethyl acetate and methyl isobutyrate; ketone solvents, such as acetone and methyl ethyl ketone; ether solvents, such as tetrahydrofuran and dioxane; and alcohol solvents, such as methanol and isopropanol.

With respect to the method for hydrogenation, there is no particular limitation, and a known method can be used. For example, the hydrogenation can be conducted in a batchwise manner or in a continuous flow manner under a hydrogen pressure of 3 to 30 MPa at a reaction temperature of 60 to 250°C. When the reaction temperature is 60°C or higher, too long a reaction time is not required, and, when the reaction temperature is 250°C or lower, cleavage of molecular chains or hydrogenation of an ester site (present in, for example, constituent unit (a)) can be suppressed.

Examples of catalysts used in the hydrogenation reaction include metals, such as nickel, palladium, platinum, cobalt, ruthenium, and rhodium, and oxides, salts, and complex compounds of the above metals, and further include solid catalysts comprising the above metal and a porous carrier, such as carbon, alumina, zirconium oxide, silica, silica-alumina, or diatomaceous earth, having the metal supported thereon.

After the hydrogenation, the resultant resin mixture is withdrawn from the reaction vessel, and the catalyst and volatile component are removed from the mixture to obtain vinyl copolymer resin (A). As a method for removing the volatile component, a known method, for example, using a devolatilizing extruder or a vacuum devolatilizing vessel can be used.

The method is described above in which a polymerization reaction of vinyl copolymer resin (A) is first performed and then hydrogenation is performed, but a method may be employed in which hydrogenation of benzene rings of a monomer is preliminarily performed and the resultant monomer (aliphatic vinyl monomer) is subjected to copolymerization. Such a polymerization of (a)an (meth)acrylate monomer and an aliphatic vinyl monomer can be performed by a known method, for example, the method described in Japanese Unexamined Patent Publication No. Sho 63-170475.

Specific examples of the aliphatic vinyl monomers include vinylcyclohexane, isopropenylcyclohexane, and 1-isopropenyl-2-methylcyclohexane. Of these, preferred is vinylcyclohexane.

When a monomer is preliminarily subjected to hydrogenation of benzene rings, the reactivity of the monomer is reduced. Therefore, it is preferred that vinyl copolymer resin (A) is first produced and then hydrogenated.

### <Other resins>

In the first layer in the laminate material of the present invention, a resin other than the above-described vinyl copolymer resin (A) can be blended in such an amount that the transparency of the layer is not sacrificed. Examples of resins which can be blended into the first layer include polystyrene, a methyl methacrylate-styrene copolymer resin, an acrylonitrile-styrene copolymer resin, polymethyl methacrylate, polycarbonate, and polyester.

### [Second layer]

In the laminate material of the present invention, a second layer comprising thermoplastic resin (B) is stacked on the above-described first layer. A conventional laminate material comprising, for example, vinyl copolymer resin (A) layers stacked on both sides of a vinyl copolymer resin (B) layer having styrene constitutional units is excellent in the surface hardness, form stability under heat or when absorbing water, and adhesion to a coating composition, but unsatisfactory in the heat resistance under load.

The present inventor has made extensive and intensive studies with a view toward developing a laminate material having improved heat resistance under load while maintaining excellent adhesion between the layers constituting the laminate material. As a result, it has been found that a laminate material having a construction in which a second layer comprising the below-described thermoplastic resin (B) is stacked on the above-mentioned first layer, or a laminate material having a construction in which a third layer comprising vinyl copolymer resin (A) is stacked on the second layer on the side opposite to the surface in contact with the first layer can be improved in the heat resistance under load while maintaining excellent adhesion between the layers constituting the laminate material.

### <Thermoplastic resin (B)>

Thermoplastic resin (B) contained in the second layer constituting the laminate material of the present invention comprises constituent unit (c) derived from an aromatic vinyl compound, and constituent unit (d) derived from at least one compound selected from the group consisting of acrylic acid, methacrylic acid, an unsaturated cyclic acid anhydride, and a maleimide compound. Thermoplastic resin (B) may be a random copolymer in which the constituent units are randomly arranged, or a block copolymer in which a block comprising certain constituent units is present. Further, with respect to the unsaturated cyclic acid anhydride and maleimide compound, ethylenically double bounds of these compounds basically contribute to the synthesis reaction (copolymerization reaction) of thermoplastic resin (B).

The thermoplastic resin comprising constituent units (c) and (d) has excellent heat resistance under load. Particularly, constituent unit (d) contributes to the heat resistance under load. Further, the first layer in the laminate material of the present invention exhibits excellent form stability under heat or when absorbing water. Therefore, the laminate material of the present invention, which is a laminate material comprising the first layer and the second layer, exhibits excellent form stability in various environments, and further is unlikely to suffer deformation even under load in a heat environment. Specifically, for example, thermoplastic resin (B) generally has a glass transition temperature of 110 to 140°C.

As mentioned below, constituent unit (c) is derived from, for example, styrene, which is different in various properties, such as the structure and polarity, from (a)an (meth)acrylate monomer from which constituent unit (a) is derived and which is contained in a large amount in vinyl copolymer resin (A) in the first layer (and the third layer). Therefore, it seems that the first layer (and the third layer) is(are) not compatible with the second layer. However, the present inventor unexpectedly has found that the second layer comprising thermoplastic resin (B), which comprises such constituent unit (c), particularly comprises a large amount of constituent unit (c), exhibits excellent adhesion to the first layer (and the third layer).

From the viewpoint of the above-described heat resistance under load and the adhesion between the layers constituting the laminate material, in thermoplastic resin (B), the amount of constituent unit (c) is preferably 70 to 95 mol%, based on the total moles of constituent unit (c) and constituent unit (d) (100 mol%). When the amount of constituent unit (c) is in the above range, the adhesion of the second layer to the first layer (and the third layer) is improved, and further the heat resistance under load of the laminate material of the present invention is improved.

In thermoplastic resin (B), the amount of constituent unit (d) is preferably 5 to 30 mol%, based on the total moles of constituent unit (c) and constituent unit (d) (100 mol%), and, from the viewpoint of the heat resistance under load of the laminate material of the present invention, the amount of constituent unit (d) is more preferably 5 to 25 mol%, further preferably 5 to 20 mol%.

Examples of aromatic vinyl compounds from which the above-described constituent unit (c) is derived include styrene, α-methylstyrene, o-methylstyrene, and p-methylstyrene. Of these, from the viewpoint of the cost of the production of thermoplastic resin (B), preferred is styrene.

Examples of compounds from which constituent unit (d) is derived include acrylic acid; methacrylic acid; unsaturated cyclic acid anhydrides, such as maleic anhydride, citraconic anhydride, dimethylmaleic anhydride, dichloromaleic anhydride, bromomaleic anhydride, dibromomaleic anhydride, phenylmaleic anhydride, and diphenylmaleic anhydride; and maleimide compounds, such as N-phenylmaleimide, N-cyclohexylmaleimide, N-methylmaleimide, and N-benzylmaleimide. Of these, preferred arc acrylic acid, methacrylic acid, maleic anhydride, N-phenylmaleimide, and N-cyclohexylmaleimide.

Further, thermoplastic resin (B) may comprise constituent unit (e) other than constituent unit (c) and constituent unit (d) in such an amount that the transparency of the resin is not sacrificed. Specifically, the sum of the amounts of constituent unit (c) and constituent unit (d) is 90 mol% or more, based on the total moles of the all constituent units of thermoplastic resin (B), that is, the amount of constituent unit (e) is in the range of 10 mol% or less, based on the total moles of the all constituent units of thermoplastic resin (B) (100 mol%).

Examples of constituent units (e) include constituent units derived from (a)an (meth)acrylate. The (meth)acrylate is especially preferably methyl methacrylate.

Thermoplastic resin (B) can be produced by polymerizing the above-described monomers by a known method, for example, a polymerization method employed in the production of vinyl copolymer resin (A), and is also commercially available. Specific preferred examples of commercially available products include G9001, manufactured by PS Japan Corporation; T080, manufactured by Toyo Styrene Co., Ltd.; RYULEX A-14, manufactured by DIC Corporation; and Dylark 232, manufactured by Nova Chemicals Corporation. Of these, from the viewpoint of the cost of the production of thermoplastic resin (B), preferred are G9001, T080, and RYULEX A-14.

### [Third layer]

The laminate material of the present invention comprises the second layer stacked on the first layer as described above, and may have a construction in which a third layer comprising a specific vinyl copolymer resin (A) is further stacked on the second layer.

The construction of the third layer is the same as that of the first layer, and the third layer comprises vinyl copolymer resin (A) described above in connection with the first layer, and another resin, such as polystyrene, may be blended into the third layer in such an amount that the transparency of the layer is not sacrificed. Specifically, the laminate material of the present invention can have a construction in which the second layer is sandwiched between the first layer and the third layer each comprising vinyl copolymer resin (A). Vinyl copolymer resins (A) constituting the first layer and third layer (and another resin blended if necessary) may be the same or different. From the viewpoint of facilitating the production and making uniform the properties of the layers on and under the second layer, it is preferred that vinyl copolymer resins (A) constituting the first layer and third layer (and another resin blended if necessary) are the same.

As mentioned above, in the present invention, the third layer is optional, but, when the third layer is present, for example, a difference of the water absorption between the surface and back surface of the second layer is reduced, so that the laminate material is unlikely to suffer warpage due to a change of the humidity of an atmosphere, and thus the effect of the present invention is remarkably exhibited. Therefore, it is preferred that the laminate material of the present invention has the third layer.

### [Method for producing the laminate material]

The laminate material of the present invention has, as mentioned above, a construction in which the second layer is stacked on the first layer, or a construction in which the first layer and the third layer are stacked on both sides of the second layer.

### <Optional components>

The first through third layers constituting the laminate material of the present invention may contain an ultraviolet light absorber. Examples of ultraviolet light absorbers include benzophenone ultraviolet light absorbers, such as 2,4-dihydroxybenzophenone, 2-hydroxy-4-methoxybenzophenone, 2-hydroxy-4-n-octoxybenzophenone, 2-hydroxy-4-dodecyloxybenzophenone, 2-hydroxy-4-octadecyloxy benzophenone, 2,2'-dihydroxy-4-methoxybenzophenone, 2,2' -dihydroxy-4,4' -dimethoxybenzophenone, and 2,2',4,4'-tetrahydroxybenzophenone; benzotriazole ultraviolet light absorbers, such as 2-(2-hydroxy-5-methylphenyl)benzotriazole, 2-(2-hydroxy-3,5-di-t-butylphenyl)benzotriazole, 2-(2-hydroxy-3-t-butyl-5-methylphenyl)benzotriazole, and (2H-benzotriazol-2-yl)-4,6-bis(1-methyl-1-phenylethyl)phenol; benzoate ultraviolet light absorbers, such as phenyl salicylate and 2,4-di-t-butylphenyl 3,5-di-t-butyl-4-hydroxybenzoate; hindered amine ultraviolet light absorbers, such as bis(2,2,6,6-tetramethylpiperidin-4-yl) sebacate; and triazine ultraviolet light absorbers, such as 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3.5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine, With respect to the method for mixing an ultraviolet light absorber into the layer, there is no particular limitation, and, for example, a method in which all the components are compounded, or a method in which a masterbatch is dry-blended can be used.

Further, in the first through third layers, other various additives can be mixed. Examples of such additives include an antioxidant, a discoloration resistive agent, an antistatic agent, a release agent, a lubricant, a dye, and a pigment. With respect to the method for mixing an additive into the layer, there is no particular limitation, and, for example, a method in which all the components are compounded, a method in which a masterbatch is dry-blended, or a method in which all the components are dry-blended can be used.

### <Method for producing the laminate material>

With respect to the method for producing the laminate material of the present invention, there is no particular limitation, and a known method for producing a resin laminate material can be widely employed. For example, a co-extrusion method, or a method of laminating layers through a bonding layer can be employed.

With respect to the co-extrusion method, there is no particular limitation. For example, in a feed block system, vinyl copolymer resin (A) (which contains, for example, the above-mentioned ultraviolet light absorber or additive if necessary) forming the first layer and thermoplastic resin (B) (which contains, for example, the above-mentioned ultraviolet light absorber or additive if necessary) forming the second layer, and optionally vinyl copolymer resin (A) (which contains, for example, the above-mentioned ultraviolet light absorber or additive if necessary) forming the third layer are extruded in a molten state, and, using a feed block, the first layer is stacked on one side of the second layer or the first layer and third layer are respectively stacked on both sides of the second layer, and extruded by a T-die into a sheet form, and then cooled through a shaping roll to form a desired laminate material.

In a multi-manifold system, molten resins (each of which contains, for example, the above-mentioned ultraviolet light absorber or additive if necessary) forming the first layer and second layer (and optionally the third layer) are supplied and, within a multi-manifold die, the first layer is stacked on one side of the second layer or the first layer and third layer are respectively stacked on both sides of the second layer, and extruded into a sheet form, and then cooled through a shaping roll to form a desired laminate material.

With respect to the method of laminating layers through a bonding layer, there is no particular limitation, and a known method can be used. For example, a bonding agent is applied to one of sheet-form shaped articles of the first layer and second layer using, e.g., spraying, a brush, a gravure roll, or ink-jetting, and another sheet-form shaped article is stacked on the bonding agent and pressed until the bonding agent is cured to form a desired laminate material. The third layer can be similarly stacked.

Further, in the co-extrusion method, an arbitrary bonding resin layer can be formed between the first layer and the second layer (and between the second layer and the third layer if necessary) during co-extrusion.

The laminate material of the present invention, which is, for example, produced as mentioned above, preferably has a total thickness (length of the first layer and second layer (and optionally the third layer) along the stacking direction) in the range of from 0.1 to 10.0 mm. When the total thickness of the laminate material is 0.1 mm or more, a failure of transfer is unlikely to occur in the transfer of a planished shape to the surface of the laminate material using, e.g., a roll, or the thickness accuracy is unlikely to become poor. Further, when the total thickness is 10.0 mm or less, it is unlikely that, for example, uneven cooling after shaping causes the thickness accuracy or appearance to be poor. The total thickness of the laminate material is more preferably in the range of from 0.1 to 5.0 mm, further preferably in the range of from 0.1 to 3.0 mm.

Further, in the laminate material of the present invention, it is preferred that the first layer and third layer individually have a thickness in the range of from 10 to 500 µm. When the thickness is less than 10 µm, the laminate material is likely to be unsatisfactory in surface hardness. On the other hand, when the thickness is more than 500 µm, the laminate material is likely to be unsatisfactory in form stability when absorbing water. From such a point of view, the thickness of these layers is preferably in the range of from 20 to 200 µm.

In the laminate material of the present invention, at least one of the top and bottom surfaces of the laminate material as viewed in the stacking direction, that is, in the laminate material of the present invention which comprises the first layer and the second layer, at least one of the surface of the first layer on the side opposite to the side in contact with the second layer and the surface of the second layer on the side opposite to the side in contact with the first layer, or, in the laminate material of the present invention which comprises the first through third layers, at least one of the surface of the first layer on the side opposite to the side in contact with the second layer and the surface of the third layer on the side opposite to the side in contact with the second layer can be subjected to at least one treatment selected from the group consisting of a hard-coat treatment, an antireflection treatment, an antifouling treatment, an antistatic treatment, a weathering resistance treatment, and a glare protection treatment. With respect to the method for the above treatment, there is no particular limitation, and a known method can be used. For example, there can be mentioned a method in which a thermosetting or photo-curing film is applied, a method in which an antireflection coating composition is applied, a method in which a dielectric thin film is deposited, and a method in which an antistatic coating composition is applied. As a coating agent for the hard-coat treatment, a known coating agent can be used, and examples include organic coating agents, such as a melamine resin, an urethane resin, an acrylic resin, and an ultraviolet curing acrylic resin; silicon coating agents, such as silane compounds; inorganic coating agents, such as metal oxides; and organic-inorganic hybrid coating agents.

### [Use of the laminate material]

As described above, the laminate material of the present invention is a laminate material comprising the first layer and the second layer or a laminate material comprising the first through third layers, and the first layer and third layer exhibit excellent surface hardness, excellent form stability under heat or when absorbing water, and excellent adhesion to a coating composition, and the second layer exhibits excellent heat resistance under load and further exhibits excellent adhesion to the first layer and third layer. Therefore, the laminate material of the present invention, which is a laminate material comprising the layers having such various functions, has a characteristic feature that the surface hardness, form stability under heat or when absorbing water, adhesion to a coating composition, heat resistance under load, and adhesion between the individual layers are excellent, and thus the laminate material is advantageously used in, for example, a transparent substrate material or a transparent protecting material. The transparent substrate material and transparent protecting material are advantageously used as a member for, for example, an information board, an indicator board, a signboard, a frame, a window for a vehicle, such as a gondola, a sunroof, a window for building, a partition, a glazing material, a cover for a lighting, a front panel for an image display device, an instrument cover, a reflector, a light guide plate, a diffuser plate, a UV screening filter, or a cover for an electronic device, particularly, as a member for a portable display device, such as a portable telephone, a portable electronic toy, a personal digital assistant, or a mobile PC, or a stationary display device, such as a liquid crystal monitor for a laptop PC or a desktop PC, or a liquid crystal television.

### EXAMPLES

Hereinbelow, the present invention will be described in more detail with reference to the following Examples, which should not be construed as limiting the scope of the present invention. The laminate materials and single-layer sheets obtained in the Examples and Comparative Examples were evaluated as follows.

### <Evaluation of the form stability when absorbing water>

A test specimen 20 cm square is cut. The specimen is placed in a hot-air drying machine set at a temperature of 60°C and allowed to stand for 16 hours, and then placed in an environment at a relative humidity of 50% at a temperature of 23°C and allowed to stand for 24 hours or longer to adjust the conditions of the specimen. The resultant specimen is placed on the horizontal surface so that the side of the specimen to be in contact with water (which side corresponds to the side of the first layer opposite to the surface in contact with the second layer, or corresponds to an arbitrary side of a single-layer sheet) points downward, and respective spaces between the four corners of the bottom surface of the specimen and the horizontal surface are individually measured, and an average of the measured spaces is determined as an initial value for the space.

In an environment at a relative humidity of 50% at a temperature of 23°C, the above test specimen is placed in a container containing therein water so that only one surface of the specimen is in contact with the surface of water, and maintained for 24 hours. The specimen is removed from the container, and the resultant specimen is placed on the horizontal surface so that the side of the specimen which has been contacted with water points downward, and respective spaces between the four corners of the bottom surface of the specimen and the horizontal surface are individually measured, and an average of the measured spaces is determined as a test value for the space. A change of the space from the initial value (i.e., a difference between the test value and the initial value) is used for evaluation of the form stability. With respect to the test specimen having a thickness of 1.0 mm, one having a change of 1.0 mm or less is acceptable.

### <Evaluation of the form stability under heat>

A test specimen 12 cm square is cut. A 10 cm gage mark is made on the specimen in the machine direction, and 10 cm is determined as an initial value for the length of the gage mark. Kaolin is applied to the specimen, and the resultant specimen is placed horizontally in a container in which kaolin is applied onto the bottom of the container, and the container is placed in a hot-air drying machine set at a temperature of 100°C and maintained for one hour.

The container is removed from the drying machine, and the specimen is removed from the container and a length of the gage mark is further measured, and determined as a test value for the length of the gage mark. A change of the length of the gage mark (i.e., a difference between the test value and the initial value) was calculated, in terms of a percentage based on the initial value, and used for evaluation of the form stability under heat. With respect to the test specimen having a thickness of 1.0 mm, one having a change of within ±0.5% is acceptable.

### <Evaluation of the deflection temperature under load>

Measurement was conducted in accordance with substantially the same method as the method described in JIS K7191-2 except that the size of the test specimen had a lengh of 127 mm, a height of 1 mm, and a width of 13.1 mm, that the distance beween the supports was 100 mm, and that the bending stress was 1.36 MPa, and the highest temperature at which the deflection of the specimen was 0.25 mm or less was determined as a deflection temperature under load. The specimen having a deflection temperature under load of 95°C or higher is acceptable.

### <Pencil scratch hardness test>

In accordance with JIS K 5600-5-4, a pencil was pressed against the surface of the first layer (or an arbitrary surface with respect to a single-layer sheet) at an angle of 45 degrees with a load of 750 g, wherein the hardness of the pencil used was stepwise increased and this operation was repeated, and the hardness of the hardest pencil with which no scratch was caused in the surface was determined as a pencil hardness. The specimen having a pencil hardness of 2H or more is acceptable.

### <Evaluation of the adhesion to a hard-coat coating film>

In accordance with JIS K 5600-5-6, a right-angle lattice pattern was cut in a hard-coat coating film (which is formed, with respect to the laminate material having a three-layer construction, on one of the surfaces of the first layer or third layer on the side opposite to the surface in contact with the second layer, or which is formed, with respect to the laminate material having a two-layer construction, on the surface of the first layer on the side opposite to the surface in contact with the second layer, or which is formed on an arbitrary surface with respect to a single-layer sheet) so that the cut pattern reached the layer immediately under the hard-coat coating film, and then an attempt was made to peel off the hard-coat coating film using an adhesive tape, and a resistance of the hard-coat coating film to the peeling off the layer immediately under the film was evaluated. The laminate material having a class 0 or 1 for the test result is acceptable.

### <Evaluation of the adhesion between the layers constituting the laminate material>

A test specimen having a size of 10 cm x 30 cm is cut. The cut specimen was wound around the sidewall of a cylinder having a diameter of 80 mm so that the longer sides of the specimen were parallel with the bottom of the cylinder to check whether peeling occurred at the interface between the individual layers constituting the laminate material. The laminate material in which peeling at the interface occurred in 2 specimens or less among the 10 specimens is acceptable.

### Synthesis Example 1 [Production of vinyl copolymer resin (A1)]

Methyl methacrylate/styrene copolymer resin (A1') (ESTYRENE MS750, manufactured by Nippon Steel Chemical Group; methyl methacrylate/styrene = 75/25 (molar ratio)) was dissolved in methyl isobutyrate (manufactured by Kanto Chemical Co., Inc.) to prepare a 10% by weight methyl isobutyrate solution. In a 1,000 mL autoclave apparatus were charged 500 parts by weight of the 10% by weight methyl isobutyrate solution of resin (A1') and 1 part by weight of a 10% by weight Pd/C (manufactured by N. E. CHEMCAT CORPORATION), and the resultant mixture was maintained under a hydrogen pressure of 9 MPa at 200°C for 15 hours, hydrogenating the benzene ring sites. After completion of the hydrogenation, the catalyst was removed from the solution using a filter, and the resultant solution was introduced to a desolvating apparatus to obtain vinyl copolymer resin (A1) in a pellet form. The result of the measurement of ¹H-NMR showed that the amount of the methyl methacrylate constituent units in the resin was 75 mol%, and the result of the measurement of an absorbance at a wavelength of 260 nm with respect to the resin before and after the hydrogenation showed that the rate of hydrogenation reaction (hydrogenation reaction rate) of the benzene rings was 99%. Vinyl copolymer resin (A1) had a glass transition temperature of 120°C.

### Synthesis Example 2 [Production of vinyl copolymer resin (A2)]

Vinyl copolymer resin (A2) was obtained in substantially the same manner as in Synthesis Example 1 except that, instead of methyl methacrylate-styrene copolymer resin (A1') used in Synthesis Example 1, methyl methacrylate/styrene copolymer resin (A2') (ESTYRENE MS600, manufactured by Nippon Steel Chemical Group; methyl methacrylate/styrene = 63/37 (molar ratio)) was used. The result of the measurement of ¹H-NMR showed that the amount of the methyl methacrylate constituent units in the resin was 63 mol%, and the result of the measurement of an absorbance at a wavelength of 260 nm with respect to the resin before and after the hydrogenation showed that the hydrogenation reaction rate of the benzene rings was 99%. Vinyl copolymer resin (A2) had a glass transition temperature of 120°C.

### Synthesis Example 3 [Production of vinyl copolymer resin (A3)]

Vinyl copolymer resin (A3) was obtained in substantially the same manner as in Synthesis Example 1 except that, instead of methyl methacrylate-styrene copolymer resin (A1') used in Synthesis Example 1, methyl methacrylate/styrene/α-methylstyrene copolymer resin (A3') (CLEARPOR, manufactured by JSP; methyl methacrylate/styrene/α-methylstyrene = 75/18/7 (molar ratio)) was used. The result of the measurement of ¹H-NMR showed that the amount of the methyl methacrylate constituent units in the resin was 75 mol%, and the result of the measurement of an absorbance at a wavelength of 260 nm with respect to the resin before and after the hydrogenation showed that the hydrogenation reaction rate of the benzene rings was 99%. Vinyl copolymer resin (A3) had a glass transition temperature of 126°C.

### Synthesis Example 4 [Production of vinyl copolymer resin (A4)]

Vinyl copolymer resin (A4) was obtained in substantially the same manner as in Synthesis Example 1 except that, instead of methyl methacrylate-styrene copolymer resin (A1') used in Synthesis Example 1, methyl methacrylate/styrene copolymer resin (A4') (ESTYRENE MS300, manufactured by Nippon Steel Chemical Group; methyl methacrylate/styrene = 30/70 (molar ratio)) was used. The result of the measurement of ¹H-NMR showed that the amount of the methyl methacrylate constituent units in the resin was 30 mol%, and the result of the measurement of an absorbance at a wavelength of 260 nm with respect to the resin before and after the hydrogenation showed that the hydrogenation reaction rate of the benzene rings was 99%. Vinyl copolymer resin (A4) had a glass transition temperature of 129°C.

### Synthesis Example 5 [Production of vinyl copolymer resin (A5)]

A monomer composition comprising 92 mol% of the purified methyl methacrylate (manufactured by Mitsubishi Gas Chemical Company, Inc.), 8 mol% of the purified styrene (manufactured by Wako Pure Chemical Industries, Ltd.), and 0.002 mol% of t-amyl peroxy-2-ethylhexanoate (trade name: Luperox 575; manufactured by Arkema Yoshitomi, Ltd.) as a polymerization initiator was continuously fed to a 10 L perfect mixing vessel having a helical ribbon screw at 1 kg/h, and subjected to continuous polymerization at an average residence time of 2.5 hours at a polymerization temperature of 150°C. The resultant resin mixture was continuously withdrawn from the bottom so that the level of the mixture in the polymerization vessel was constant, and introduced to a desolvating apparatus to obtain vinyl copolymer resin (A5') in a pellet form.

The obtained vinyl copolymer resin (A5') was hydrogenated in the same manner as in Synthesis Example 1 to obtain vinyl copolymer resin (A5) in a pellet form. The result of the measurement of ¹H-NMR showed that the amount of the methyl methacrylate constituent units in the resin was 90 mol%, and the result of the measurement of an absorbance at a wavelength of 260 nm with respect to the resin before and after the hydrogenation showed that the hydrogenation reaction rate of the benzene rings was 99%. Vinyl copolymer resin (A5) had a glass transition temperature of 112°C.

### [Synthesis Example for photo-curing hard-coat coating composition (a)]

Into a mixing vessel having an agitating blade was introduced a composition comprising 60 parts by weight of tris(2-acryloyloxyethyl)isocyanurate (manufactured by Aldrich Chemical Co., Inc.), 40 parts by weight of neopentyl glycol oligoacrylate (trade name: 215D; manufactured by Osaka Organic Chemical Industry Ltd.), 1 part by weight of 2,4,6-trimethylbenzoyldiphenylphosphine oxide (trade name: DAROCUR TPO; manufactured by Ciba Japan K. K.), 0.3 part by weight of 1-hydroxycyclohexyl phenyl ketone (manufactured by Aldrich Chemical Co., Inc.), and 1 part by weight of 2-(2H-benzotriazol-2-yl)-4,6-bis(1-methyl-1-phenylethyl)phenol (trade name: TINUVIN 234; manufactured by Ciba Japan K. K.), and the composition was stirred for one hour while maintaining at 40°C to obtain photo-curing hard-coat coating composition (a).

### Example 1 [Resin (A1)/resin (B1)/resin (A1)]

A laminate material was formed using a (multilayer) co-extrusion machine having a single-screw extruder having a screw diameter of 35 mm, a single-screw extruder having a screw diameter of 65 mm, a feed block connected to the all extruders, and a T-die connected to the feed block. Vinyl copolymer resin (A1) obtained in Synthesis Example 1 was continuously introduced to the single-screw extruder having a screw diameter of 35 mm, and extruded under conditions such that the cylinder temperature was 250°C and the extrusion speed was 6.0 kg/h. Further, thermoplastic resin (B1) which is a styrene-methacrylic acid copolymer (G9001, manufactured by PS Japan Corporation; styrene/methacrylic acid = 93/7 (molar ratio); glass transition temperature = 123°C) was continuously introduced to the single-screw extruder having a screw diameter of 65 mm, and extruded at a cylinder temperature of 240°C at an extrusion speed of 45 kg/h.

The feed block connected to the all extruders had a distributor pin for two types and three layers, and resins (A1) and (B1) were introduced to the feed block at a temperature of 250°C and stacked on one another. The three-layer laminate material comprising resins (A1) and (B1) was extruded into a sheet form by the T-die at a temperature of 250°C connected to the feed block, and a planished surface was transferred to the resultant sheet using three planishing rolls respectively at temperatures of 95°C, 115°C, and 120°C from the upstream side while cooling to obtain laminate material (C1) having resin (A1) layers stacked on both sides of a resin (B1) layer.

The obtained laminate material (C1) was a continuous sheet having a width of 500 mm and had a total thickness of 1.0 mm, and the thickness of each of the resin (A1) layers on the top and bottom sides of the resin (B1) layer was 60 µm. With respect to laminate material (C1), the above evaluations were individually made. In the evaluation of the form stability when absorbing water, the result was 0.6 mm, and, in the evaluation of the form stability under heat, the result was -0.1%. The deflection temperature under load was 105°C, and the pencil scratch hardness was 3H. In the evaluation of the adhesion to a hard-coat coating film, the result was class 0, and, in the evaluation of the adhesion between the layers constituting the laminate material, the result was 0/10, and the results in all of the evaluations were acceptable. The results of the above evaluations are shown in Table 1 below.

### Example 2 [Resin (A1)/resin (B2)/resin (A1)]

Laminate material (C2) having resin (A1) layers stacked on both sides of a resin (B2) layer was obtained in substantially the same manner as in Example 1 except that, instead of thermoplastic resin (B1) used in Example 1, thermoplastic resin (B2) which is a styrene-methacrylic acid copolymer (RYULEX A-14, manufactured by DIC Corporation; styrene/methacrylic acid = 86/14 (molar ratio); glass transition temperature = 130°C) was used.

The obtained laminate material (C2) had a total thickness of 1.0 mm, and the thickness of each of the resin (A1) layers on the top and bottom sides of the resin (B2) layer was 60 µm. The results of the evaluations of laminate material (C2) are shown in Table 1 below.

### Example 3 [Resin (A2)/resin (B1)/resin (A2)]

Laminate material (C3) having resin (A2) layers stacked on both sides of a resin (B1) layer was obtained in substantially the same manner as in Example 1 except that, instead of vinyl copolymer resin (A1) used in Example 1, vinyl copolymer resin (A2) obtained in Synthesis Example 2 was used.

The obtained laminate material (C3) had a total thickness of 1.0 mm, and the thickness of each of the resin (A2) layers on the top and bottom sides of the resin (B1) layer was 60 µm. The results of the evaluations of laminate material (C3) are shown in Table 1 below.

### Example 4 [Resin (A1)/resin (B3)/resin (A1)]

Laminate material (C4) having resin (A1) layers stacked on both sides of a resin (B3) layer was obtained in substantially the same manner as in Example 1 except that, instead of thermoplastic resin (B1) used in Example 1, thermoplastic resin (B3) which is a styrene-maleic anhydride copolymer (Dylark 232, manufactured by Nova Chemicals Corporation; styrene/maleic anhydride = 92/8 (molar ratio); glass transition temperature = 118°C) was used.

The obtained laminate material (C4) had a total thickness of 1.0 mm, and the thickness of each of the resin (A1) layers on the top and bottom sides of the resin (B3) layer was 60 µm. The results of the evaluations of laminate material (C4) are shown in Table 1 below.

### Example 5 [Resin (A2)/resin (B3)/resin (A2)]

Laminate material (C5) having resin (A2) layers stacked on both sides of a resin (B3) layer was obtained in substantially the same manner as in Example 4 except that, instead of vinyl copolymer resin (A1) used in Example 4, vinyl copolymer resin (A2) obtained in Synthesis Example 2 was used.

The obtained laminate material (C5) had a total thickness of 1.0 mm, and the thickness of each of the resin (A2) layers on the top and bottom sides of the resin (B3) layer was 60 µm. The results of the evaluations of laminate material (C5) are shown in Table 1 below.

### Example 6 [Resin (A3)/resin (B1)/resin (A3)]

Laminate material (C6) having resin (A3) layers stacked on both sides of a resin (B1) layer was obtained in substantially the same manner as in Example 1 except that, instead of vinyl copolymer resin (A1) used in Example 1, vinyl copolymer resin (A3) obtained in Synthesis Example 3 was used.

The obtained laminate material (C6) had a total thickness of 1.0 mm, and the thickness of each of the resin (A3) layers on the top and bottom sides of the resin (B1) layer was 60 µm. The results of the evaluations of laminate material (C6) are shown in Table 1 below.

### Example 7 [Resin (A1)/resin (B1)]

Laminate material (C7) having a resin (A1) layer stacked on one side of a resin (B1) layer was obtained in substantially the same manner as in Example 1 except that, instead of the distributor pin for two types and three layers used in Example 1, a distributor pin for two types and two layers was used, that the extrusion speed for resin (A1) was 3.0 kg/h, and that the extrusion speed for resin (B1) was 48.0 kg/h.

The obtained laminate material (C7) had a total thickness of 1.0 mm, and the resin (A1) layer had a thickness of 60 µm. The results of the evaluations of laminate material (C7) are shown in Table 1 below.

### Comparative Example 1 [Resin (A4)/resin (B1)/resin (A4)]

Laminate material (C8) having resin (A4) layers stacked on both sides of a resin (B1) layer (wherein the resin (A4) layers correspond to the first layer and third layer and the resin (B1) layer corresponds to the second layer) was obtained in substantially the same manner as in Example 1 except that, instead of vinyl copolymer resin (A1) used in Example 1, vinyl copolymer resin (A4) obtained in Synthesis Example 4 was used.

The obtained laminate material (C8) had a total thickness of 1.0 mm, and the thickness of each of the resin (A4) layers on the top and bottom sides of the resin (B1) layer was 60 µm. The results of the evaluations of laminate material (C8) are shown in Table 1 below.

### Comparative Example 2 [Resin (A5)/resin (B1)/resin (A5)]

Laminate material (C9) having resin (A5) layers stacked on both sides of a resin (B1) layer (wherein the resin (A5) layers correspond to the first layer and third layer and the resin (B1) layer corresponds to the second layer) was obtained in substantially the same manner as in Example 1 except that, instead of vinyl copolymer resin (A1) used in Example 1, vinyl copolymer resin (A5) obtained in Synthesis Example 5 was used.

The obtained laminate material (C9) had a total thickness of 1.0 mm, and the thickness of each of the resin (A5) layers on the top and bottom sides of the resin (B1) layer was 60 µm. The results of the evaluations of laminate material (C9) are shown in Table 1 below.

### Comparative Example 3 [Resin (A1)/resin (B4)/resin (A1)]

Laminate material (C10) having resin (A1) layers stacked on both sides of a resin (B4) layer (wherein the resin (A1) layers correspond to the first layer and third layer and the resin (B4) layer corresponds to the second layer) was obtained in substantially the same manner as in Example 1 except that, instead of thermoplastic resin (B1) used in Example 1, methyl methacrylate-styrene copolymer resin (B4) (ESTYRENE MS200, manufactured by Nippon Steel Chemical Group; styrene/methyl methacrylate = 80/20 (molar ratio); glass transition temperature = 100°C) was used.

The obtained laminate material (C10) had a total thickness of 1.0 mm, and the thickness of each of the resin (A1) layers on the top and bottom sides of the resin (B4) layer was 60 µm. The results of the evaluations of laminate material (C10) are shown in Table 1 below.

### Comparative Example 4 [Resin (A6)/resin (B1)/resin (A6)]

Laminate material (C11) having resin (A6) layers stacked on both sides of a resin (B1) layer (wherein the resin (A6) layers correspond to the first layer and third layer and the resin (B1) layer corresponds to the second layer) was obtained in substantially the same manner as in Example 1 except that, instead of vinyl copolymer resin (A1) used in Example 1, methacrylic resin (A6) (polymethyl methacrylate, Delpet 80NE, manufactured by Asahi Kasei Chemicals Corporation; glass transition temperature - 105°C) was used.

The obtained laminate material (C11) had a total thickness of 1.0 mm, and the thickness of each of the resin (A6) layers on the top and bottom sides of the resin (B1) layer was 60 µm. The results of the evaluations of laminate material (C11) are shown in Table 1 below.

### Comparative Example 5 [Resin (A6)/resin (B2)/resin (A6)]

Laminate material (C12) having resin (A6) layers stacked on both sides of a resin (B2) layer (wherein the resin (A6) layers correspond to the first layer and third layer and the resin (B2) layer corresponds to the second layer) was obtained in substantially the same manner as in Example 2 except that, instead of vinyl copolymer resin (A1) used in Example 2, methacrylic resin (A6) was used.

The obtained laminate material (C12) had a total thickness of 1.0 mm, and the thickness of each of the resin (A6) layers on the top and bottom sides of the resin (B2) layer was 60 µm. The results of the evaluations of laminate material (C12) are shown in Table 1 below.

### Comparative Example 6 [Resin (A6)/resin (B3)/resin (A6)]

Laminate material (C13) having resin (A6) layers stacked on both sides of a resin (B3) layer (wherein the resin (A6) layers correspond to the first layer and third layer and the resin (B3) layer corresponds to the second layer) was obtained in substantially the same manner as in Example 4 except that, instead of vinyl copolymer resin (A1) used in Example 4, methacrylic resin (A6) was used.

The obtained laminate material (C13) had a total thickness of 1.0 mm, and the thickness of each of the resin (A6) layers on the top and bottom sides of the resin (B3) layer was 60 µm. The results of the evaluations of laminate material (C13) are shown in Table 1 below.

### Comparative Example 7 [Resin (B4)/resin (B1)/resin (B4)]

Laminate material (C 14) having resin (B4) layers stacked on both sides of a resin (B1) layer (wherein the resin (B4) layers correspond to the first layer and third layer and the resin (B1) layer corresponds to the second layer) was obtained in substantially the same manner as in Example 1 except that, instead of vinyl copolymer resin (A1) used in Example 1, methyl methacrylate-styrene copolymer resin (B4) was used, and that the roll temperatures were respectively 90°C, 110°C, and 110°C from the upstream side.

The obtained laminate material (C14) had a total thickness of 1.0 mm, and the thickness of each of the resin (B4) layers on the top and bottom sides of the resin (B1) layer was 60 µm. The results of the evaluations of laminate material (C14) are shown in Table 1 below.

### Comparative Example 8 [Resin (A6)]

A single-layer sheet was formed using a single-layer extrusion machine having a single-screw extruder having a screw diameter of 65 mm and a T-die connected to the extruder. Methacrylic resin (A6) was continuously introduced to the single-screw extruder, and extruded at a cylinder temperature of 250°C at an extrusion speed of 50.0 kg/h. The resultant methacrylic resin (A6) was extruded into a sheet form by the T-die at a temperature of 250°C connected to the extruder, and a planished surface was transferred to the resultant sheet using three planishing rolls respectively at temperatures of 80°C, 90°C, and 100°C from the upstream side while cooling to obtain single-layer sheet (C15).

The obtained single-layer sheet (C15) had a thickness of 1.0 mm. The results of the evaluations of single-layer sheet (C15) are shown in Table 1 below.

### Comparative Example 9 [Resin (B1)]

Single-layer sheet (C16) was obtained in substantially the same manner as in Comparative Example 8 except that, instead of methacrylic resin (A6) used in Comparative Example 8, thermoplastic resin (B1) was used.

The obtained single-layer sheet (C16) had a thickness of 1.0 mm. The results of the evaluations of single-layer sheet (C16) are shown in Table 1 below.

### Comparative Example 10 [Resin (B3)]

Single-layer sheet (C17) was obtained in substantially the same manner as in Comparative Example 8 except that, instead of methacrylic resin (A6) used in Comparative Example 8, thermoplastic resin (B3) was used.

The obtained single-layer sheet (C17) had a thickness of 1.0 mm. The results of the evaluations of single-layer sheet (C17) are shown in Table 1 below.

### Comparative Example 11 [Resin (A1)/resin (B5)/resin (A1)]

Laminate material (C18) having resin (A1) layers stacked on both sides of a resin (B5) layer (wherein the resin (A1) layers correspond to the first layer and third layer and the resin (B5) layer corresponds to the second layer) was obtained in substantially the same manner as in Example 1 except that, instead of thermoplastic resin (B1) used in Example 1, polystyrene (B5) (HF77, manufactured by PS Japan Corporation; glass transition temperature = 100°C) was used.

The obtained laminate material (C18) had a total thickness of 1.0 mm, and the thickness of each of the resin (A1) layers on the top and bottom sides of the resin (B5) layer was 60 µm. The results of the evaluations of laminate material (C18) are shown in Table 1 below.

**[Table 1]**

| Example | Layer construction | Evaluation of form stability when absorbing water | Evaluation of form stability under heat | Deflecation temperature under load | Pencil scratch hardness | Evaluation of adhesion to hard-coat coating film | Evaluation of adhesion between layers constituting laminate material |
|---|---|---|---|---|---|---|---|
| Example 1 | Resin(A1)/Resin(B1)/Resin(Al) | 0.6mm | -0.1% | 105°C | 3H | Class 0 | 0/10 |
| | | ○ | ○ | ○ | ○ | ○ | ○ |
| Example 2 | Resin(A1)Resin(B2)/Resin(A1) | 0.7mm | -0.1% | 108°C | 3H | Class 0 | (0/10 |
| | | ○ | ○ | ○ | ○ | ○ | ○ |
| Example 3 | Resin(A2)/Resin(B1)/Resin(A2)/Resin(A2) | 0.6mm | -0.1% | 106°C | 2H | Class 1 | 0/10 |
| | | 0.6mm | ○ | ○ | ○ | ○ | ○ |
| Example 4 | Resin(A11)/Resin(B3)/Resin(A11) | 0.7mm | -0.1% | 105°C | 3H | Class 0 | 0/10 |
| | | ○ | ○ | ○ | ○ | ○ | ○ |
| Example 5 | Resin(A2)/Resin(B3)/Resin(A2) | 0.6mm | -0.1% | 106°C | 2H | Class 1 | 0/10 |
| | | ○ | ○ | ○ | C | ○ | ○ |
| Example 6 | Resin(A3)/Resin(B 1)/Resin(A3) | 0.7mm | -0.1% | 107°C | 3H | Class 0 | 0/10 |
| | | ○ | ○ | ○ | | ○ | ○ |
| Example 7 | Resin(A1)/Resin(B1) | 0.9mnn | -0.4% | 106°C | 3H (A1 side) | Class 0 (A1 side) | 0/10 |
| | | ○ | ○ | ○ | ○ | ○ | ○ |
| Comparative Example 1 | Resin(A4)/Resin(B1)/Resin(A4) | 0.5mm | -0.2% | 106°C | H | Class 2 | 0/10 |
| | | ○ | ○ | ○ | × | × | ○ |
| Comparative Example 2 | Resin(A5)/Resin(B1)/Resin(A5) | 1.3mm | -0.4% | 104°C | 3H | Class 0 | 8/10 |
| | | × | ○ | × | ○ | ○ | × |
| Comparative Example 3 | Resin(A1)/Resin(B4)/Resin(A1) | 0.6mm | -0.3% | 88°C | 3H | Class 0 | 0/10 |
| | | ○ | ○ | × | ○ | ○ | ○ |
| Comparative Example 4 | Resin(A6)/Resin(B1)/Resin(A6) | 2.1mm | -0.7% | 102°C | 3H | Class 0 | 10/10 |
| | | × | × | × | ○ | ○ | × |
| Comparative Example 5 | Resin(A6)/Resin(B2)/Resin(A6) | 2.3mm | -0.7% | 103°C | 3H | Class 0 | 3/10 |
| | | × | × | ○ | ○ | ○ | × |
| Comparative Example 6 | Resin(A6)/Resin(B3)/Resin(A6) | 2.2mm | -0.7%) | 103°C | 3H | Class 0 | 3/10 |
| | | × | × | ○ | ○ | ○ | × |
| Comparative Example 7 | Resin(B4)/Resin(B1)Resin(B4) | 0.5mm | -0.8% | 100°C | H | Class 2 | 0/10 |
| | | ○ | × | ○ | × | × | ○ |
| Comparative Example 8 | Resin(A6) | 72mm | -10% | 87°C | 3H | Class 0 | - |
| | | × | × | × | ○ | ○ | |
| Comparative Example 9 | Resin(B1) | 0 5mm | -0.1% | 106°C | H | Class 5 | - |
| | | ○ | ○ | ○ | × | × | |
| Comparative Example 10 | Resin(B3) | 0.8mm | -0.1% | 109°C | H | Class 5 | - |
| | | ○ | ○ | ○ | × | × | |
| Comparative Example 11 | Resin(A1)/Resin(B5)/Resin(A1) | 0.5mm | -0.3% | 88°C | 3H | Class 0 | 10/10 |
| | | ○ | ○ | ○ | ○ | ○ | ○ |

| | | | | | | | |
|---|---|---|---|---|---|---|---|
| ○: Acceptable, ×: Unacceptable | | | | | | | |

As apparent from Table 1, the laminate material of the present invention has excellent form stability when absorbing water, excellent form stability under heat, excellent surface hardness (pencil scratch hardness), and excellent adhesion to a hard-coat coating film, and further has excellent deflection temperature under load and excellent adhesion between the layers constituting the laminate material.

### INDUSTRIAL APPLICABILITY

The laminate material of the present invention has excellent properties as mentioned above, and therefore can be advantageously used as a transparent substrate material or a transparent protecting material. More specifically, the laminate material is advantageously used as a member for, for example, an information board, an indicator board, a signboard, a frame, a window for a vehicle, such as a gondola, a sunroof, a window for building, a partition, a glazing material, a cover for a lighting, a front panel for an image display device, an instrument cover, a reflector, a light guide plate, a diffuser plate, a UV screening filter, or a cover for an electronic device, particularly, as a member for a portable display device, such as a portable telephone, a portable electronic toy, a personal digital assistant, or a mobile PC, or a stationary display device, such as a liquid crystal monitor for a laptop PC or a desktop PC, or a liquid crystal television.

## Claims

1. A laminate material comprising a first layer comprising a vinyl copolymer resin (A), and a second layer comprising a thermoplastic resin (B) stacked on the first layer,
or comprising the first layer, the second layer, and a third layer comprising the vinyl copolymer resin (A) stacked on the second layer,
the vinyl copolymer resin (A) constituting the first layer and the vinyl copolymer resin (A) constituting the third layer being the same or different, the vinyl copolymer resin (A) comprising a constituent unit (a) represented by the following formula (1) and a constituent unit (b) represented by the following formula (2): 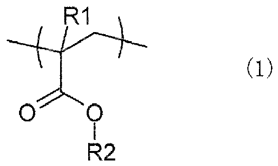 wherein, in the formula (1), R1 represents a hydrogen atom or a methyl group, and R2 represents a hydrocarbon group having 1 to 16 carbon atoms and optionally having a hydroxyl group or an alkoxy group, and when a plurality of the constituent units (a) are present, a plurality of R1s and a plurality of R2s are the same or different, 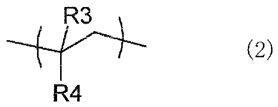 wherein, in the formula (2), R3 represents a hydrogen atom or a methyl group, and R4 represents a phenyl group, a cyclohexadienyl group, a cyclohexenyl group, or a cyclohexyl group, which optionally has at least one substituent selected from the group consisting of a hydrocarbon group having 1 to 4 carbon atoms, a hydroxyl group, an alkoxy group, and a halogen atom, and when a plurality of the constituent units (b) are present, a plurality of R3s and a plurality of R4s are the same or different,
the amount of the constituent unit (a) is 50 to 85 mol%, based on the total moles of the constituent unit (a) and constituent unit (b),
the thermoplastic resin (B) comprising a constituent unit (c) derived from an aromatic vinyl compound, and a constituent unit (d) derived from at least one compound selected from the group consisting of acrylic acid, methacrylic acid, an unsaturated cyclic acid anhydride, and a maleimide compound.

2. The laminate material according to claim 1, wherein the vinyl copolymer resin (A) has a glass transition temperature of 110 to 140°C.

3. The laminate material according to claim 1 or 2, wherein, in the formula (1), each of R1 and R2 is a methyl group.

4. The laminate material according to any one of claims 1 to 3, wherein, in the formula (2), R4 is a phenyl group, a cyclohexadienyl group, a cyclohexenyl group, or a cyclohexyl group. cyclohexyl group.

5. The laminate material according to any one of claims 1 to 4, wherein the amount of the constituent unit (c) is 70 to 95 mol%, based on the total moles of the constituent unit (c) and constituent unit (d) of the thermoplastic resin (B).

6. The laminate material according to any one of claims 1 to 5, wherein the sum of the amounts of the constituent unit (c) and constituent unit (d) is 90 mol% or more, based on the total moles of the all constituent units present in the thermoplastic resin (B).

7. The laminate material according to any one of claims 1 to 6, wherein the constituent unit (c) is derived from styrene, and the constituent unit (d) is derived from at least one compound selected from the group consisting of acrylic acid, methacrylic acid, maleic anhydride, N-phenylmaleimide, and N-cyclohexylmaleimide.

8. The laminate material according to any one of claims 1 to 7, wherein the laminate material has a total thickness in the range of from 0.1 to 10.0 mm, and the first layer and/or the third layer has a thickness in the range of from 10 to 500 µm.

9. The laminate material according to any one of claims 1 to 8, wherein the laminate material has a total thickness in the range of from 0.1 to 3.0 mm, and the first layer and/or the third layer has a thickness in the range of from 20 to 200 µm.

10. The laminate material according to any one of claims 1 to 9, wherein at least one layer of the first layer, the second layer, and the third layer contains an ultraviolet light absorber.

11. The laminate material according to any one of claims 1 to 10, wherein at least one of the top and bottom surfaces of the laminate material as viewed in the stacking direction has been subjected to at least one treatment selected from the group consisting of a hard-coat treatment, an antireflection treatment, an antifouling treatment, an antistatic treatment, a weathering resistance treatment, and a glare protection treatment.

12. A transparent substrate material comprising the laminate material according to any one of claims 1 to 11.

13. A transparent protecting material comprising the laminate material according to any one of claims 1 to 11.
